# EUROPEAN PATENT SPECIFICATION

(11) **EP 2 838 021 B1**
(45) Date of publication and mention of the grant of the patent: **20.07.2016**
(21) Application number: 14179808.2
(22) Date of filing: 05.08.2014
(51) Int. Cl.: G06F 11/07, G06F 11/30, G06F 11/34

(54) **ELECTRONIC KEY SYSTEM**
ELEKTRONISCHES SCHLÜSSELSYSTEM
SYSTÈME DE CLÉ ÉLECTRONIQUE

(30) Priority: 09.08.2013 JP 2013166655
(43) Date of publication of application: 18.02.2015
(73) Proprietor: KABUSHIKI KAISHA TOKAI RIKA DENKI SEISAKUSHO, Niwa-gun, Aichi 480-0195 (JP)
(72) Inventor: Tatsuyama, Takuji, Niwa-gun,, Aichi 480-0195 (JP); Kunieda, Yuki, Niwa-gun,, Aichi 480-0195 (JP); Kawamura, Tetsuya, Niwa-gun,, Aichi 480-0195 (JP); Kawamura, Masayuki, Niwa-gun,, Aichi 480-0195 (JP)
(74) Representative: TBK

(56) References cited:
- EP-A1- 2 590 146
- US-A- 4 737 784
- US-A1- 2007 276 939
- US-A1- 2008 218 373
- US-A1- 2008 309 457
- US-B1- 6 664 899

## Description

The present invention relates to a portable device that includes a function for managing operation history.

A portable device performs various types of operations when a central processing unit (CPU) executes a variety of programs. For example, the portable device performs a communication operation with a communication device installed in a vehicle (refer to Japanese Laid-Open Patent Publication No. 2002-29385).

*Further prior art can be found in document* US 2007/276939 A1*, disclosing an electronic apparatus including a programmable logic device which loads forming circuit information to form a counter circuit to count a value of the number of times of system reset and to set an initial value of the counter circuit from a memory device on turning on a power source, counts the value of the number of times of the system reset by the counter circuit for each occurrence of the system reset in a current-carrying state, wherein a processor reads in the value of the number of times of the system reset to be stored in the programmable logic device to determine whether or not the value reaches the predetermined reference number of times, and stops starting processing when the value has reached the reference number of times.*

*Further prior art can be found in document* US 2008/309457 A1, *disclosing a power-save for passive and two-way transmitters. Further prior art can be found in document* US 6 664 899 B1*, disclosing a vehicular wireless control apparatus and portable unit for the vehicular wireless control apparatus. Further prior art can be found in document* US 4 737 784 A*, disclosing a keyless entry system for automotive vehicle devices with weak-battery alarm. Further prior art can be found in document* US 2011/050390 A1*, disclosing an electronic access control device and management system.*

It is desirable for one to be able to know how a portable device is used in the market and the causes that led to the collection of defective products from the market.

*The above mentioned objects are achieved by what is defined in the appended independent claims, in particular by an electronic key system comprising a portable device as well as a wireless communication device as defined in claim 1. Advantageous modifications thereof are set forth in the appended dependent claims.*

The present invention provides a portable device that is capable of using operation history as a diagnostic function.

One embodiment of a portable device includes a control unit configured to control operation of the portable device and a history management unit configured to count resets of the control unit and hold the reset count as operation history.

In this structure, the reset frequency of the control unit is held as operation history. The operation history allows for the recognition of the frequency of battery replacements and the frequency of abnormal resets. This allows for one to assume how a portable device has been used and identify the cause of a problem that occurred in the portable device. Accordingly, the operation history may be used as a diagnostic function of the portable device.

Other embodiments and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic block diagram illustrating the structure of an electronic key system;
Fig. 2 is a schematic timing chart illustrating operations of a portable device when a CPU is reset; and
Fig. 3 is a schematic timing chart illustrating an example of communication performed between a vehicle and the portable device during smart communication.

One embodiment of a portable device will now be described.

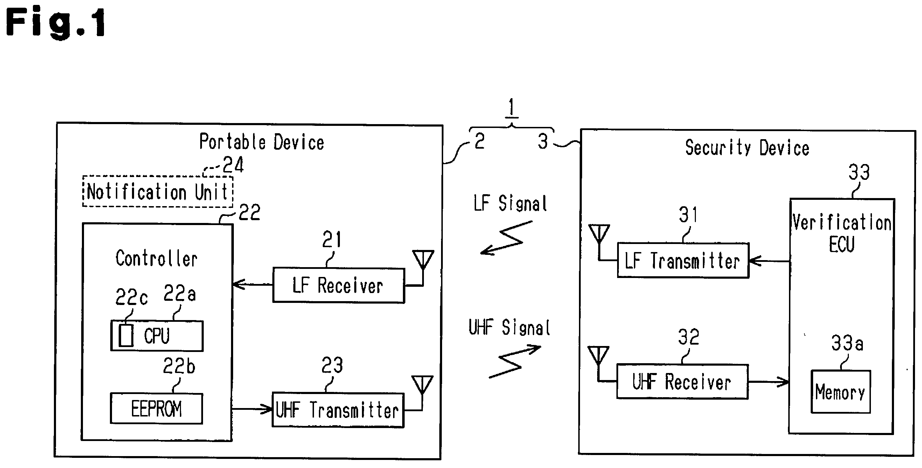

As illustrated in Fig. 1, an electronic key system 1 includes a portable device 2 and a security device 3 which is installed in a vehicle. The portable device 2 is capable of performing wireless communication with the security device 3. The security device 3 is one

example of a wireless communication device. An LF signal and a UHF signal are employed in the wireless communication. The LF signal is defined as a radio wave in the LF band. The UHF signal is defined as a radio wave in the UHF band. The portable device 2 serves as an electronic key, or a vehicle key in the present embodiment. The security device 3 permits vehicle operations after performing key verification on the portable device 2.

The portable device 2 includes an LF receiver 21, a controller 22, and a UHF transmitter 23. The LF receiver 21 is capable of receiving LF signals, such as a wake signal and a challenge signal, which are transmitted from the security device 3 in an area surrounding the vehicle. The controller 22 includes a CPU 22a, a read-only memory (ROM) (not illustrated), a random access memory (RAM) (not illustrated), and an electrically erasable and programmable read-only memory (EEPROM) 22b. The EEPROM 22b stores an ID unique to the portable device 2. The CPU 22a determines whether or not a LF signal, which is received with the LF receiver 21, is the wake signal. When the LF signal is the wake signal, the CPU 22a transmits an acknowledgment signal from the UHF transmitter 23 to respond to the wake signal. When receiving the challenge signal with the LF receiver 21, the CPU 22a transmits a response signal, which includes the ID, from the UHF transmitter 23.

The security device 3 includes an LF transmitter 31, a UHF receiver 32, and a verification electronic control unit (ECU) 33. The LF transmitter 31 transmits an LF signal to the area surrounding the vehicle under the control of the verification ECU 33. The UHF receiver 32 is capable of receiving the UHF signals, such as the acknowledgement signal and the response signal, which are transmitted from the portable device 2 to a predetermined area. The verification ECU 33 includes a nonvolatile memory 33a. The memory 33a stores an ID of the portable device 2 that corresponds to the vehicle as a reference ID. The verification ECU 33 transmits the wake signal from the LF transmitter 31 to monitor the approach of the portable device 2. When receiving the acknowledgement signal with the UHF receiver 32, the verification ECU 33 transmits the challenge response from the LF transmitter 31. When receiving the response signal with the UHF receiver 32, the verification ECU 33 determines whether or not the ID, which is included in the response signal, conforms to the reference ID. When the ID verification is accomplished, the verification ECU 33 permits vehicle operations.

The portable device 2 includes a battery as a power supply. Using the power from the battery, the portable device 2 performs various types of operations including communication with the security device 3. For example, when a button battery, which serves as a primary battery, is employed, the battery is replaced when the battery voltage decreases. This allows the portable device 2 to perform various types of operations again. When a rechargeable battery, or a secondary battery, is employed and the battery voltage decreases, the battery is charged to increase the battery voltage. When the battery deteriorates and the battery life ends, the battery is replaced.

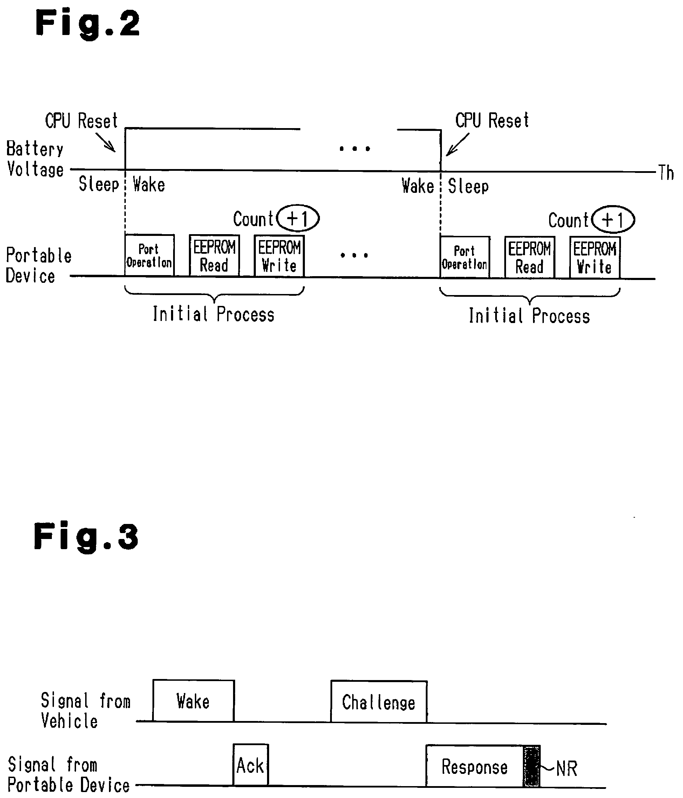

As illustrated in Fig. 2, the CPU 22a is reset when the portable device 2 is activated or the battery voltage becomes lower than a threshold Th. Whenever the CPU 22a is reset, an initial operation is performed. The initial operation includes a port operation, the reading of data from the EEPROM 22b, and the writing of data to the EEPROM 22b. The CPU 22a includes, for example, an initial counter 22c. The CPU 22a increments the count of the initial counter 22c each time the initial operation is performed. The count of the initial counter 22c, which indicates the reset frequency of the CPU 22a (that is, the number of times the CPU 22a has been reset), is written to the EEPROM 22b. This counts the resets of the CPU 22a and holds the reset count as operation history. In this manner, the portable device 2 includes a function for managing the operation history. The CPU 22a is one example of a control unit. The CPU 22a, the EEPROM 22b, and the initial counter 22c function as a history management unit. The EEPROM 22b is one example of a memory unit. The threshold Th is set to a higher voltage than the operational voltage at which the initial operation may be properly performed. This allows for the CPU 22a to properly perform the initial operation even when the battery voltage (monitor voltage) becomes lower than the threshold Th.

The operation of the portable device 2 will now be described.

As illustrated in Fig. 3, in an example in which smart communication is performed, the security device 3 of the vehicle transmits the wake signal. When the portable device 2 receives the wake signal, the portable device 2 transmits the acknowledgement signal. When the security device 3 receives the acknowledgement signal, the security device 3 transmits the challenge signal. When the portable device 2 receives the challenge signal, the portable device 2 transmits the response signal, to which an initial counter bit NR is added. The initial counter bit NR indicates the count value of the initial counter 22c stored in the EEPROM 22b and corresponds to information indicating the reset frequency of the CPU 22a. In this manner, the portable device 2 is configured to generate an electric signal, which includes the information indicating the reset frequency of the CPU 22a, and transmit the electric signal to another communication device.

When the security device 3 of the vehicle receives the response signal, the security device 3 checks the initial counter bit NR to obtain the reset frequency of the CPU 22a. When the reset frequency reaches a reference value, the security device 3 illustrates a notification on, for example, an instrumental panel. The notification includes, for example, an indication prompting the user to replace the battery or take the key to a car dealer.

The present embodiment has the advantages described below.
(1) The portable device 2 records the reset frequency of the CPU 22a as an operation history. The operation history allows the frequency of battery replacements and the frequency of abnormal resets to be recognized. This allows one to assume how the portable device 2 has been used and identify the cause of a problem that occurred in the portable device 2. Accordingly, the operation history may be used as a diagnostic function of the portable device 2.
(2) By using the count value of the initial counter 22c, the reset frequency of the CPU 22a may be appropriately managed.
(3) The initial counter value is written to the EEPROM 22b. This allows for the portable device 2 to stably hold the reset frequency of the CPU 22a.
(4) The initial counter value is written to the EEPROM 22b. This allows for the CPU 22a to use the initial counter value, which is retrieved from the EEPROM 22b, for the diagnostic function.
(5) A notification is indicated when the reset frequency of the CPU 22a reaches the reference value. Such notification prompts a user of the vehicle to take the necessary measures, such as battery replacement or repair.
(6) The above notification allows the user of the vehicle to immediately recognize an abnormality in the portable device 2.
(7) When the portable device 2 or the security device 3 records the frequency of battery replacements, the number of resets, which excludes those caused by battery replacement and includes abnormal resets, may be specified. This contributes to the identification of the cause of a problem.
(8) When the battery is frequently replaced, the environment in which the portable device 2 is used may be improved by eliminating the cause. For example, when a noise similar to the wake signal is received with the portable device 2, wake determination may be performed even though the acknowledgement signal is not transmitted. This consumes battery power and increases the frequency of battery replacement. In such a case, noise may be considered as the cause of the frequent battery replacement. Therefore, the frequency of battery replacement may be decreased by identifying the source that generates noise and changing the storage location of the portable device 2 to improve the environment in which the portable device 2 is used.
(9) When the battery voltage becomes lower than the threshold Th due to noise, the CPU 22a is reset. For example, the reset frequency of the CPU 22a may reach the reference value even after the battery is replaced. This may be due to an abnormal reset caused by noise such as static electricity. Therefore, the usage environment of the portable device 2 may be improved by identifying the source that generates noise and changing the storage location of the portable device 2.
(10) When transmitting the response signal in response to the challenge signal, the portable device 2 transmits the initial counter bit NR as the information indicating the reset frequency of the CPU 22a. Thus, during verification of the portable device 2 (ID verification), the information indicating the reset frequency is transmitted to the security device 3. This allows for notification of, for example, the necessity of battery replacement in an early stage when communication is started.

It should be apparent to those skilled in the art that the present invention may be embodied in many other specific forms without departing from the scope of the invention. Particularly, it should be understood that the present invention may be embodied in the following forms.

Notification that the reset frequency of the CPU 22a has reached the reference value does not have to be illustrated on the instrumental panel of the vehicle. For example, instead of or in addition to illustrating the notification, a notification may be issued using sound generated by a buzzer or a voice message.

Regardless of whether or not the reset frequency of the CPU 22a has reached the reference value, the reset frequency of the CPU 22a may be illustrated on the instrumental panel of the vehicle or the like.

Instead of the security device 3 of the vehicle, the portable device 2 may issue a notification that the reset frequency of the CPU 22a has reached the reference value and/or show the reset frequency of the CPU 22a. In this case, the portable device 2 includes a notification unit 24 that issues a notification using a display, sound, or vibration. This structure allows for the portable device 2 to independently manage operation history and perform a notification without communicating with the vehicle. For example, the notification unit 24 may be a display unit such as a liquid crystal display (LCD), or an indicator. The indicator may employ, for example, an LED. For example, the indicator may be illuminated continuously or intermittently using colors corresponding to the reset frequency of the CPU 22a. When an indicator using a single color is employed, the indicator may be intermittently illuminated in intervals corresponding to the reset frequency of the CPU 22a. The reset frequency of the CPU 22a may be illustrated by a numerical character or the like using a seven-segment LED.

The response signal may be transmitted from the portable device 2 only when the reset frequency of the CPU 22a reaches the reference value to issue a notification on the instrumental panel of the vehicle or the like. In this case, the response signal includes information indicating that the reference value has been reached.

Any value may be set as the reference value. When a smaller value is set for the reference value, the notification operation is performed in an earlier stage. Thus, an appropriate measure may be taken before the portable device 2 becomes non-functional. In contrast, when a larger value is set for the reference value, the portable device 2 may be used until just before the portable device 2 becomes non-functional.

The CPU 22a may have a counter reset function that resets the initial counter value to zero.

The application of the electronic key system 1 is not limited to the smart communication used for vehicles. That is, the portable device is not limited to a vehicle key. For example, the electronic key system may be applied to a building. In this case, the system may permit the locking or unlocking of a building door, the activation and deactivation of lights, and the like.

The present examples and embodiments are to be considered as illustrative and not restrictive, and the invention is not to be limited to the details given herein, but may be modified within the scope and equivalence of the appended claims.

A portable device (2) includes a control unit (22a) that controls operation of the portable device (2) and a history management unit (22a-22c) that counts resets of the control unit (22a) and holds the reset count as an operation history.

## Claims

1. An electronic key system (1) comprising
a portable device (2) that serves as an electronic key, the portable device (2) comprising:
a control unit (22a) configured to control operation of the portable device (2); and
a history management unit (22a-22c) configured to count resets of the control unit (22a) and hold the reset count as an operation history, and
a wireless communication device (3) that is capable of performing wireless communication with the portable device (2),
the electronic key system (1) being **characterized in that**
the history management unit (22a-22c) is configured to transmit information (NR) indicating the reset count of the control unit (22a) to the wireless communication device (3) when the wireless communication device (3) verifies the portable device (2).

2. The electronic key system (1) according to claim 1, wherein the history management unit (22a-22c) is configured to perform an initial process whenever the control unit (22a) is reset and count the reset of the control unit (22a) by incrementing an initial counter value each time the initial process is performed.

3. The electronic key system (1) according to claim 2, wherein the history management unit (22a-22c) includes a memory unit (22b) configured to store the initial counter value and hold the reset count of the control unit (22a).

4. The electronic key system (1) according to claim 3, wherein the history management unit (22a-22c) is configured to read the initial counter value from the memory unit (22b) and generate an electric signal that includes information (NR) indicating the reset count of the control unit (22a).

5. The electronic key system (1) according to any one of claims 1 to 4, wherein the portable device (2) further comprises a notification unit (24) configured to issue a notification indicating that the reset count of the control unit (22a) has reached a reference value.

6. The electronic key system (1) according to claim 5, wherein
the control unit (22a) is configured to be reset when voltage of a battery in the portable device (2) becomes lower than a threshold (Th), and
the notification unit (24) is configured to issue a notification requesting for replacement of the battery when the reset count reaches a reference value.

7. The electronic key system (1) according to claim 5 or 6, wherein the notification unit (24) is an indicator located in the portable device (2).

8. The electronic key system (1) according to any one of claims 1 to 7, wherein
the electronic key system (1) is a communication system for a vehicle,
the portable device (2) is a vehicle key, and
the wireless communication device (3) is a security device installed in the vehicle.

## Patentansprüche

1. Elektronisches Schlüsselsystem (1), mit
einer portablen Vorrichtung (2), die als ein elektronischer Schlüssel dient, wobei die portable Vorrichtung (2) aufweist:
eine Steuereinheit (22a), die dazu eingerichtet ist, um einen Betrieb der portablen Vorrichtung (2) zu steuern, und
eine Verlaufsverwaltungseinheit (22a bis 22c), die dazu eingerichtet ist, um Rücksetzvorgänge der Steuereinheit (22a) zu zählen und die Rücksetzzählung als einen Betriebsverlauf zu halten, und mit
einer Drahtloskommunikationsvorrichtung (3), die dazu in der Lage ist, eine Drahtloskommunikation mit der portablen Vorrichtung (2) durchzuführen,
wobei das elektronische Schlüsselsystem (1) **dadurch gekennzeichnet ist, dass**
die Verlaufsverwaltungseinheit (22a bis 22c) dazu eingerichtet ist, um Information (NR), die auf die Rücksetzzählung der Steuereinheit (22a) hinweist, zu der Drahtloskommunikationsvorrichtung (3) zu übertragen, wenn die Drahtloskommunikationsvorrichtung (3) die portable Vorrichtung (2) verifiziert.

2. Elektronisches Schlüsselsystem (1) nach Anspruch 1, wobei die Verlaufsverwaltungseinheit (22a bis 22c) dazu eingerichtet ist, um einen Initialprozess durchzuführen, wann immer die Steuereinheit (22a) zurückgesetzt ist, und um das Rücksetzen der Steuereinheit (22a) zu zählen durch Inkrementieren eines Anfangszählerwerts jedes Mal, wenn der Initialprozess durchgeführt wird.

3. Elektronisches Schlüsselsystem (1) nach Anspruch 2, wobei die Verlaufsverwaltungseinheit (22a bis 22c) eine Speichereinheit (22b) aufweist, die dazu eingerichtet ist, um den Anfangszählerwert zu speichern und die Rücksetzzählung der Steuereinheit (22a) zu halten.

4. Elektronisches Schlüsselsystem (1) nach Anspruch 3, wobei die Verlaufsverwaltungseinheit (22a bis 22c) dazu eingerichtet ist, um den Anfangszählerwert von der Speichereinheit (22b) zu lesen und ein elektrisches Signal zu erzeugen, das Information (NR) aufweist, die auf die Rücksetzzählung der Steuereinheit (22a) hinweist.

5. Elektronisches Schlüsselsystem (1) nach einem der Ansprüche 1 bis 4, wobei die portable Vorrichtung (2) ferner eine Benachrichtigungseinheit (24) aufweist, die dazu eingerichtet ist, um eine Benachrichtigung auszulösen, die darauf hinweist, dass die Rücksetzzählung der Steuereinheit (22a) einen Referenzwert erreicht hat.

6. Elektronisches Schlüsselsystem (1) nach Anspruch 5, wobei
die Steuereinheit (22a) dazu eingerichtet ist, um zurückgesetzt zu werden, wenn eine Spannung einer Batterie in der portablen Vorrichtung (2) geringer als eine Schwelle (Th) wird, und
die Benachrichtigungseinheit (24) dazu eingerichtet ist, um eine Benachrichtigung auszulösen, die ein Ersetzen der Batterie anfordert, wenn die Rücksetzzählung einen Referenzwert erreicht.

7. Elektronisches Schlüsselsystem (1) nach Anspruch 5 oder 6, wobei die Benachrichtigungseinheit (24) eine Anzeige ist, die bei der portablen Vorrichtung (2) angeordnet ist.

8. Elektronisches Schlüsselsystem (1) nach einem der Ansprüche 1 bis 7, wobei
das elektronische Schlüsselsystem (1) ein Kommunikationssystem für ein Fahrzeug ist,
die portable Vorrichtung (2) ein Fahrzeugschlüssel ist, und
die Drahtloskommunikationsvorrichtung (3) eine bei dem Fahrzeug installierte Sicherheitsvorrichtung ist.

## Revendications

1. Système de clé électronique (1) comprenant
un dispositif portatif (2) qui sert de clé électronique, le dispositif portatif (2) comprenant :
une unité de commande (22a) configurée pour commander le fonctionnement du dispositif portatif (2) ; et
une unité de gestion d'historique (22a-22c) configurée pour compter les réinitialisations de l'unité de commande (22a) et maintenir le compte de réinitialisation comme un historique de fonctionnement, et
un dispositif de communication sans fil (3) qui est capable d'effectuer une communication sans fil avec le dispositif portatif (2),
le système de clé électronique (1) étant **caractérisé en ce que** :
l'unité de gestion d'historique (22a-22c) est configurée pour transmettre des informations (NR) indiquant le compte de réinitialisation de l'unité de commande (22a) au dispositif de communication sans fil (3) lorsque le dispositif de communication sans fil (3) vérifie le dispositif portatif (2).

2. Système de clé électronique (1) selon la revendication 1, dans lequel l'unité de gestion d'historique (22a-22c) est configurée pour effectuer un processus initial quand l'unité de commande (22a) est réinitialisée et compter la réinitialisation de l'unité de commande (22a) en incrémentant une valeur de compteur initiale chaque fois que le processus initial est effectué.

3. Système de clé électronique (1) selon la revendication 2, dans lequel l'unité de gestion d'historique (22a-22c) inclut une unité de mémoire (22b) configurée pour stocker la valeur de compteur initiale et maintenir le compte de réinitialisation de l'unité de commande (22a).

4. Système de clé électronique (1) selon la revendication 3, dans lequel l'unité de gestion d'historique (22a-22c) est configurée pour lire la valeur de compteur initiale à partir de l'unité de mémoire (22b) et générer un signal électrique qui inclut des informations (NR) indiquant le compteur de réinitialisation de l'unité de commande (22a).

5. Système de clé électronique (1) selon l'une quelconque des revendications 1 à 4, dans lequel le dispositif portatif (2) comprend en outre une unité de notification (24) configurée pour émettre une notification indiquant que le compte de réinitialisation de l'unité de commande (22a) a atteint une valeur de référence.

6. Système de clé électronique (1) selon la revendication 5, dans lequel
l'unité de commande (22a) est configurée pour être réinitialisée lorsque la tension d'une batterie dans le dispositif portatif (2) devient inférieure à un seuil (Th), et
l'unité de notification (24) est configurée pour émettre une notification demandant le remplacement de la batterie lorsque le compte de réinitialisation atteint une valeur de référence.

7. Système de clé électronique (1) selon la revendication 5 ou 6, dans lequel l'unité de notification (24) est un indicateur situé dans le dispositif portatif (2).

8. Système de clé électronique (1) selon l'une quelconque des revendications 1 à 7, dans lequel
le système de clé électronique (1) est un système de communication pour un véhicule,
le dispositif portatif (2) est une clé de véhicule, et
le dispositif de communication sans fil (3) est un dispositif de sécurité installé dans le véhicule.
